# EUROPÄISCHE PATENTANMELDUNG

(11) **EP 3 032 363 A1**
(43) Veröffentlichungstag der Anmeldung: **15.06.2016**
(21) Anmeldenummer: 14197676.1
(22) Anmeldetag: 12.12.2014
(51) Int. Cl.: G05B 19/042, G05B 19/05, G06F 9/50

(54) **Verfahren zum Betreiben einer Automatisierungseinrichtung**

(71) Anmelder: Siemens Aktiengesellschaft, 80333 München (DE)
(72) Erfinder: Lutz, Benjamin, Dr., 76327 Pfinztal (DE)

(57) **Zusammenfassung**

Die Erfindung betrifft ein Verfahren zum Betreiben einer Automatisierungseinrichtung (6), wobei mittels eines grafischen Editors eines Engineering-Systems (7) eine Vielzahl von Funktionsplänen (1) erstellt wird, die zur Automatisierung einer technischen Anlage oder eines technischen Prozesses vorgesehen sind. Es werden Maßnahmen vorgeschlagen, mittels welcher ein Überschreiten der Zykluszeit eines Automatisierungsgerätes (9, 10) für die Verarbeitung von aus Funktionsplänen (1) erzeugten (Automatisierungs-)Funktionen (FC1, FC2, ... FC5) weitgehend vermieden wird.

## Beschreibung

Die Erfindung betrifft ein Verfahren zum Betreiben einer Automatisierungseinrichtung, wobei mittels eines grafischen Editors eines Engineering-Systems eine Vielzahl von Funktionsplänen erstellt wird, die zur Automatisierung einer technischen Anlage oder eines technischen Prozesses vorgesehen sind. Ferner betrifft die Erfindung eine Automatisierungseinrichtung mit einem Engineering-System und mit mindestens zwei Automatisierungsgeräten zur Durchführung des Verfahrens sowie ein Automatisierungsgerät für eine derartige Automatisierungseinrichtung.

Ein solches Verfahren ist beispielsweise aus dem Siemens-Katalog ST PCs 7, Ausgabe 2014/15, Seite 4/7 bekannt. Ein Anwender erstellt mittels eines auf einem Engineering-System ablauffähigen grafischen Editors - einem so genannten "Continuous Function Chart (CFC)-Editor - aus vorgefertigten Bausteinen (Objekten) nach Maßgabe einer zu lösenden Automatisierungsaufgabe eine Automatisierungslösung bzw. ein Anwender- oder Steuerprogramm für ein Automatisierungsgerät. Dazu wählt der Anwender die Bausteine bzw. Objekte, z. B. einen Regler- oder Zähler-Baustein aus einem verfügbaren Bausteinvorrat aus, platziert die Bausteine z. B. per Drag&Drop in einem Funktionsplan (z. B. CFC-Plan) und verschaltet diese per Mausklick miteinander. Unter dem Begriff "verschalten" wird verstanden, dass z. B. für die Kommunikation zwischen den Bausteinen Werte von einem Ausgang zu einem oder mehreren Eingängen übertragen werden. Nachdem der Anwender den Funktionsplan erstellt hat, welcher eine Messstelle - z. B. ein Ventil, einen Motor oder einen Regler der Anlage repräsentiert - erzeugt das Engineering-System mittels des Automatisierungsgerätes lesbare Automatisierungsobjekte in Form einer Funktion, die in dieses Automatisierungsgerät geladen und dort im Rahmen der Steuerung eines technischen Prozesses bzw. zur Lösung der Automatisierungsaufgabe verarbeitet werden. Aufgrund der Komplexität der zu steuernden Anlage oder des zu steuernden technischen Prozesses sind gewöhnlich mehrere tausend CFC-Pläne zu erstellen und die daraus übersetzten Funktionen in eine Vielzahl von Automatisierungsgeräten zu laden. Dort verarbeiten die Automatisierungsgeräte während Verarbeitungszyklen die Funktionen, wobei es vorkommen kann, dass ein Automatisierungsgerät die Funktionen während eines derartigen Zyklus nicht verarbeiten kann, was eine Echtzeitverletzung bedeutet. Die zulässige Verarbeitungszeit wird z. B. deshalb überschritten, weil die Laufzeiten der Funktion in Abhängigkeit vom Prozessabbild stark schwanken können und darüber hinaus diese Funktions-Laufzeiten aufgrund des Betriebszustands des Automatisierungsgerätes und/oder der zu steuernden Anlage - z. B. ein Betriebszustand "Hochfahren", "Normalbetrieb" oder "Störung" - beeinträchtigt wird. Je höher der "Füllstand" eines Automatisierungsgerätes, d. h. je größer die Anzahl der zu verarbeitenden Funktionen ist, desto größer ist die Gefahr, dass die Zeit zur Abarbeitung der Funktionen größer ist als die dafür zulässige Zykluszeit des Automatisierungsgerätes. In diesem Fall kann eine störungsfreie Automatisierung der Anlage nicht mehr gewährleistet werden.

Der Erfindung liegt daher die Aufgabe zugrunde, ein Verfahren der eingangs genannten Art anzugeben, welches ein Überschreiten der Zykluszeit eines Automatisierungsgerätes für die Verarbeitung von aus Funktionsplänen erzeugten (Automatisierungs-)Funktionen weitgehend vermeidet. Darüber hinaus ist eine Automatisierungseinrichtung zur Durchführung des Verfahrens sowie ein Automatisierungsgerät für eine derartige Automatisierungseinrichtung anzugeben.

Diese Aufgabe wird im Hinblick auf das Verfahren durch die im Anspruch 1 angegebenen, bezüglich der Automatisierungseinrichtung durch die im Anspruch 4 sowie betreffend das Automatisierungsgerät mittels der im Anspruch 7 angegebenen Maßnahmen gelöst.

Vorteilhaft ist, dass eine rekonfigurierbare Automatisierung mit Funktionsplänen (z. B "Continuous Function Chart (CFC)-Pläne) ermöglicht wird, deren Verarbeitung dynamisch in Abhängigkeit der Auslastung der Automatisierungsgeräte angepasst werden kann. Darüber hinaus wird - ohne die Hardware zu verändern - eine deutlich robustere und leistungsfähigere Automatisierungseinrichtung geschaffen, welche aktiv und eigenständig Überlastszenarien entgegenwirkt. Ferner wird die Projektierung von Automatisierungsgeräten im Kontext mit Funktionsplänen vereinfacht, weil ein aufgrund von Projektierungsfehlern erzeugter zu hoher "Füllstand" eines Automatisierungsgerätes aktiv mittels der Rekonfigurationsbausteine der Automatisierungsgeräte beseitigt wird.

In einer Ausgestaltung der Erfindung ist vorgesehen, mittels der Rekonfigurationsbausteine eine Auslagerung zu quittieren. Eine vorgesehene Auslagerung einer Funktion von einem Automatisierungsgerät auf ein weiteres Automatisierungsgerät kann von dem Rekonfigurationsbaustein dieses weiteren Automatisierungsgerätes abgelehnt werden, falls diese Auslagerung zu einer Überlast des weiteren Automatisierungsgerätes führen würde.

In einer weiteren Ausgestaltung der Erfindung wird die Auslagerung einem Anwender angezeigt. Dadurch wird der Anwender in Kenntnis gesetzt, auf welchem Automatisierungsgerät eine Funktion verarbeitet wird, wodurch Rückschlüsse im Hinblick auf die Projektierung ermöglicht werden.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen in einer vereinfachten Darstellung
- Figur 1: Bestandteile einer Automatisierungseinrichtung,
- Figur 2: ein Ladezustand von zwei Automatisierungsgeräten vor einer Rekonfiguration,
- Figur 3: ein Ladezustand von zwei Automatisierungsgeräten nach einer Rekonfiguration und
- Figur 4: einen "Continuous Function Chart (CFC) "-Plan.

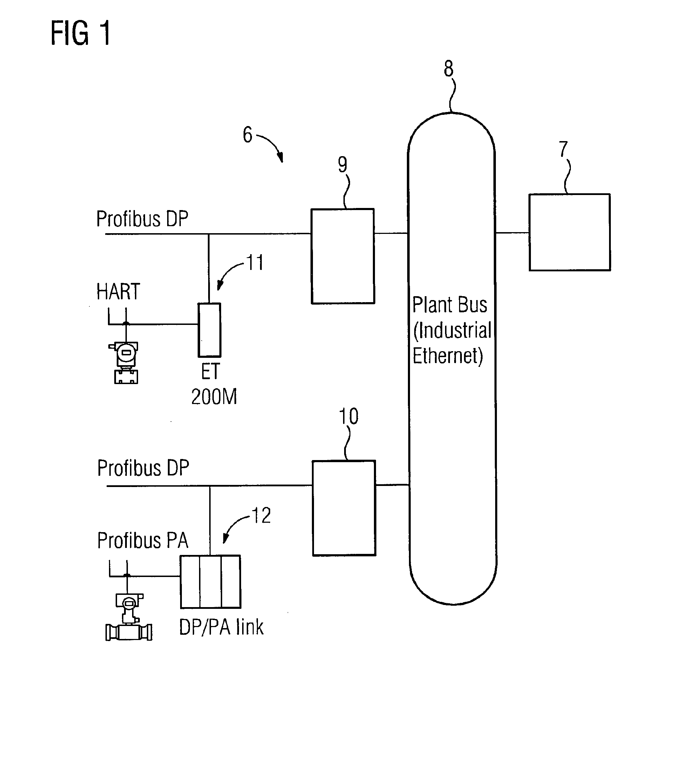

Die in den Figuren 1 bis 4 dargestellten gleichen Teile sind mit gleichen Bezugszeichen versehen.

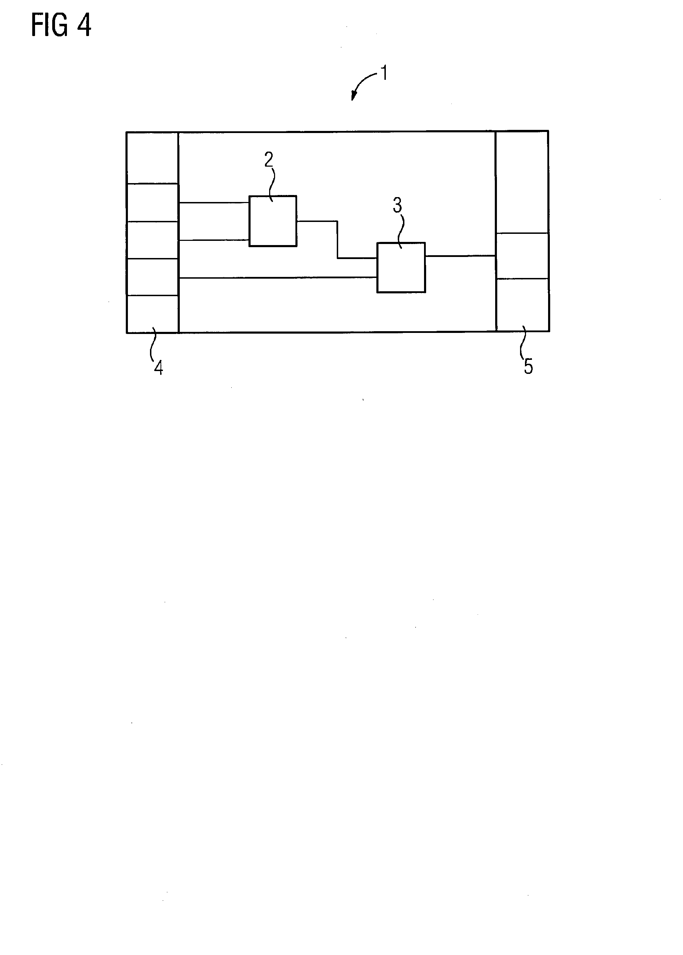

Es wird zunächst auf Figur 4 verwiesen, in welcher ein Funktionsplan in Form eines an sich bekannten Continuous Function Chart (CFC)-Plans 1 in einer Blattansicht dargestellt ist. Diesen CFC-Plan 1 erstellt ein Projekteur mittels eines CFC-Editors eines Engineering-Systems im Rahmen einer grafischen Projektierung eines Steuerprogramms für ein Automatisierungsgerät, welches über eine geeignete Busverbindung mit dem Engineering-System Informationen austauscht. Der Projekteur kann zur Erstellung des Steuerprogramms und somit zur Lösung einer Steueraufgabe auf vorgefertigte Bausteine eines Bausteinvorrats zugreifen, wobei für den Fall, dass der Projekteur per Drag&Drop einen Baustein aus dem Bausteinvorrat für den CFC-Plan 1 auswählt, eine Baustein-Instanz gebildet wird, die der Projekteur im auf einer Anzeigeeinheit des Engineering-Systems dargestellten CFC-Plan 1 positioniert, schließlich parametriert und mit einem oder mehreren ebenfalls per Drag&Drop ausgewählten und positionierten Bausteinen verschaltet. Im Folgenden werden unter dem Begriff "Bausteine" sowohl die Bausteine des Bausteinvorrats - die Bausteintypen (Bausteinvorlagen) - als auch die aus den Bausteintypen gebildeten Baustein-Instanzen (Instanz-Bausteine) verstanden.

Im vorliegenden stark vereinfachten Beispiel weist der erstellte CFC-Plan 1 lediglich zwei Bausteine 2, 3 auf, die sowohl miteinander als auch mit Randleisten 4, 5 verschaltet sind. Die Randleiste 4 kann mit Ausgängen von weiteren CFC-Plänen und/oder mit Eingängen eines Prozessabbildes, die Randleiste 5 mit Eingängen der weiteren CFC-Pläne und/oder mit Ausgängen des Prozessabbildes verschaltet bzw. verbunden sein. Aus diesem CFC-Plan 1 erzeugt der CFC-Editor oder eine weitere geeignete Software des Engineering-Systems mittels des Automatisierungsgerätes weiterverarbeitbare Objekte des Steuerprogramms, z. B. Objekte in Form von Funktions-Codebausteinen, Global Daten- oder Instanz-Datenbausteinen, die im Folgenden als Funktionen bezeichnet werden und die nach einer entsprechenden Menüeingabe des Projekteurs in ein oder mehrere Automatisierungsgeräte geladen werden.

Das oder die Automatisierungsgeräte übersetzten diese Objekte in einen Maschinencode für eine jeweilige CPU der Automatisierungsgeräte, wobei die CPUs der Automatisierungsgeräte schließlich den Maschinencode in einem RUN-Betrieb verarbeitet, während dessen die Automatisierungsgeräte einen technischen Prozess bzw. eine Anlage steuern.

Im Folgenden wird auf Figur 1 verwiesen, in welcher Bestandteile einer Automatisierungseinrichtung 6 dargestellt sind. Diese Automatisierungseinrichtung 6 umfasst ein Engineering-System 7, zwei über einen Industrial Ethernet-Bus 8 mit dem Engineering-System 7 verbundene Automatisierungsgeräte 9, 10 sowie zwei Peripherien 11, 12, die jeweils an eines der beiden Automatisierungsgeräte 9, 10 über weitere geeignete Busverbindungen angebunden sind. Selbstverständlich können an den Industrial Ethernet-Bus 7 weitere Engineering-Systeme und/oder weitere Komponenten einer Automatisierungseinrichtung, z. B. Bedien- und Beobachtungssysteme, Batch- oder Maintenance-Systeme, angeschlossen sein. Auch können je nach Komplexität der zu steuernden Anlage bzw. des zu steuernden technischen Prozesses weitere Automatisierungsgeräte sowie weitere Peripherien vorgesehen werden.

Es wird im Folgenden angenommen, dass ein Anwender mittels eines Engineering-Systems 7 eine Vielzahl von CFC-Plänen erstellt hat, von denen eine erste Anzahl für die Ansteuerung der ersten Peripherie 11 mittels des ersten Automatisierungsgerätes 9 und eine zweite Anzahl für die Ansteuerung der zweiten Peripherie 12 mittels des zweiten Automatisierungsgerätes 10 vorgesehen ist. Das Engineering-System 7 erzeugt aus den CFC-Plänen Funktionen und überträgt diese über den Industrial Ethernet-Bus 8 sowohl dem ersten als auch dem zweiten Automatisierungsgerät 9, 10, was bedeutet, dass diese Funktionen in die beiden Automatisierungsgeräte 9, 10 geladen werden.

Im ersten Automatisierungsgerät 9 werden ferner zur Ansteuerung der ersten Peripherie 11 für die Funktionen, welche in diesem ersten Automatisierungsgerät 9 zu verarbeiten sind, Abarbeitungsregeln in dazu vorgesehene Speicherbereiche des Automatisierungsgerätes 9 hinterlegt, wobei diese Abarbeitungsregeln Aufrufe zum Aufrufen der jeweiligen Funktion sowie Parameter zur Versorgung der jeweiligen Funktion umfassen und wobei die Abarbeitungsregeln mittels des Engineerings-Systems 7 dem ersten Automatisierungsgerät 9 übertragen werden. Entsprechend werden im zweiten Automatisierungsgerät 10 Speicherbereiche zur Hinterlegung von Abarbeitungsregeln eingerichtet, welche zur Verarbeitung der Funktionen benötigt werden, die auf dem zweiten Automatisierungsgerät 10 zur Ansteuerung der zweiten Peripherie 12 zu verarbeiten sind.

Es kann nun vorkommen, dass beispielsweise die Zykluszeit des ersten Automatisierungsgerätes 9 für die Verarbeitung der aus den Funktionsplänen erzeugten Funktionen überschritten wird, was bedeutet, dass die Zeit zur Abarbeitung dieser Funktionen größer ist als die dafür zulässige Zykluszeit oder größer ist als eine vorgebbare oder vorgegebene Schwelle. In diesem Fall liegt eine "Echtzeitverletzung" vor und es kann eine störungsfreie Automatisierung nicht mehr gewährleistet werden. Um dies für folgende Verarbeitungszyklen zu vermeiden, ist daher vorgesehen, eine oder mehrere der Funktionen, die für die Verarbeitung mittels des ersten Automatisierungsgerätes 9 bestimmt waren, mittels des zweiten Automatisierungsgerätes 10 zu bearbeiten, was bedeutet, dass die Bearbeitung dieser Funktionen vom ersten Automatisierungsgerät 9 zum zweiten Automatisierungsgerät 10 ausgelagert wird.

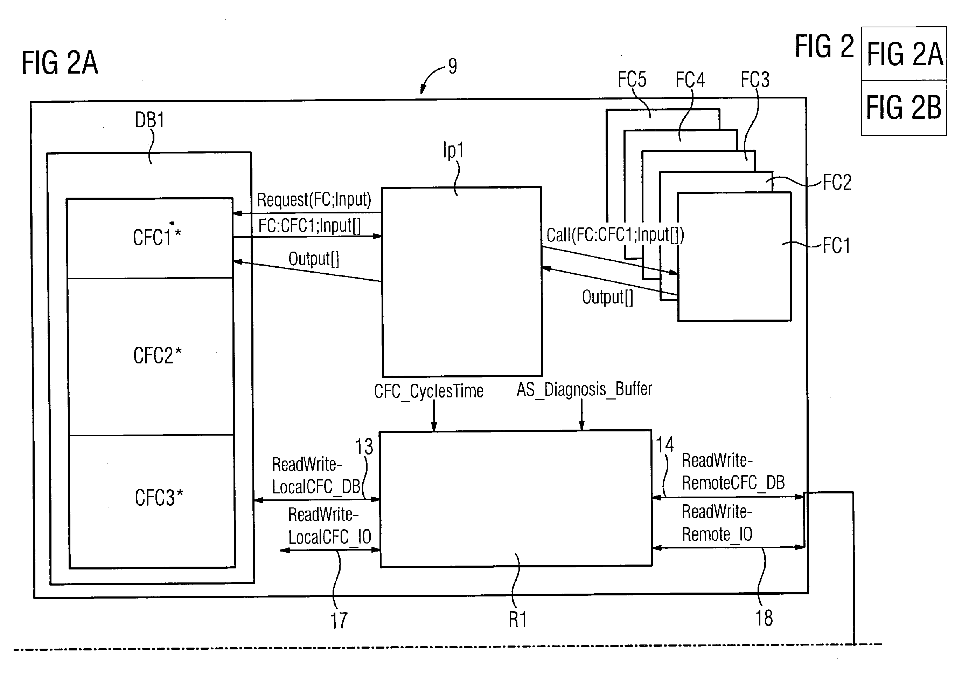

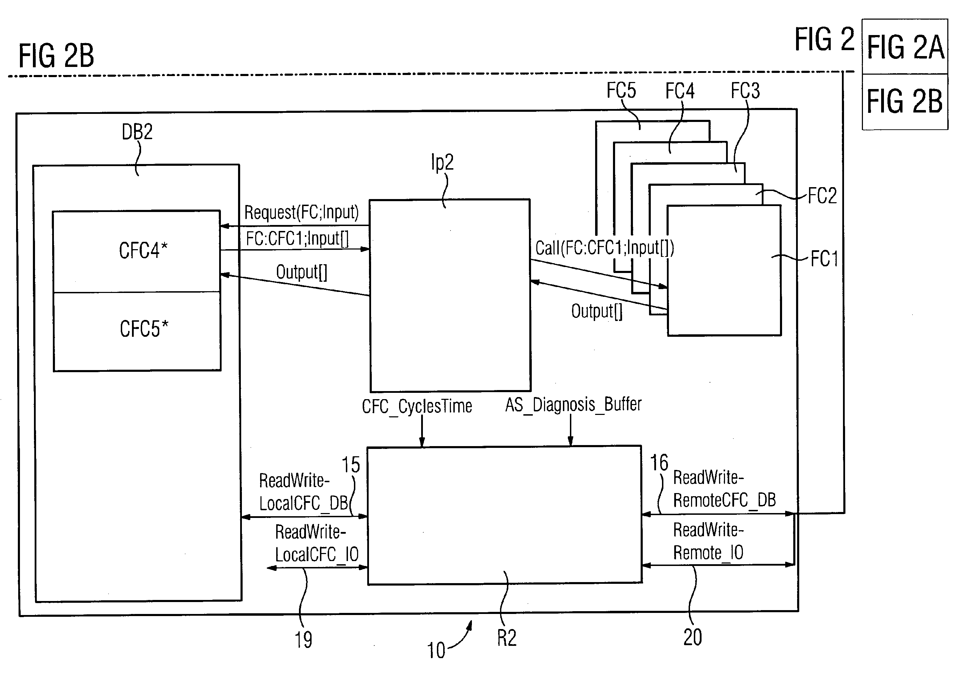

Im vorliegenden Ausführungsbeispiel wird angenommen, dass das erste Automatisierungsgerät 9 drei aus drei CFC-Plänen erzeugte Funktionen FC1, FC2, FC3 (Figur 2) während eines Verarbeitungszyklus dieses ersten Automatisierungsgerätes 9 und das zweite Automatisierungsgerät 10 zwei aus zwei CFC-Plänen erzeugte Funktionen FC4, FC5 während eines Verarbeitungszyklus dieses zweiten Automatisierungsgerätes 10 zu verarbeiten hat. Aufgrund dessen, dass das erste Automatisierungsgerät 9 die drei Funktionen FC1, FC2, FC3 zu verarbeiten hat, richtet das Automatisierungsgerät 9 in seinem Speicher DB1 drei Speicherbereiche ein, welche zur Hinterlegung von drei Abarbeitungsregeln für die Funktionen drei FC1, FC2, FC3 vorgesehen sind. Das zweite Automatisierungsgerät 10 richtet in der entsprechenden Art und Weise in einem Speicher DB2 zwei Speicherbereiche ein, in welche zwei Abarbeitungsregeln für die beiden Funktionen FC4, FC5 hinterlegt werden. Im vorliegenden Ausführungsbeispiel sind in der Zeichnung die Abarbeitungsregeln mit CFC1*, CFC2*, ... CFC5* bezeichnet, wobei - wie erläutert - das Engineering-System 7 aus jeweils einem CFC-Plan eine Funktion FC1, FC2, ... FC5 und eine dieser Abarbeitungsregeln CFC1*, CFC2*, ... CFC5*erzeugt.

Die Automatisierungsgeräte 9, 10 weisen jeweils einen Rekonfigurationsbaustein R1, R2 auf, die jeweils den Verarbeitungszyklus bzw. die Zykluszeit des jeweiligen Automatisierungsgerätes 9, 10 überwachen. Darüber hinaus ist der Rekonfigurationsbaustein R1 dazu ausgebildet ist, die lokalen Inhalte des Speichers DB1 des ersten Automatisierungsgerätes 9 über eine Schnittstelle 13 ("ReadWrite-LocalCFC_DB") zu ändern sowie diese lokalen Inhalte über eine weitere Schnittstelle 14 ("ReadWrite-RemoctCFC_DB") in den Speicher DB2 des zweiten Automatisierungsgerätes 10 zu übertragen. In der entsprechenden Art und Weise ist der Rekonfigurationsbaustein R2 des Automatisierungsgerätes 10 derart ausgestaltet, die lokalen Inhalte des Speichers DB2 des zweiten Automatisierungsgerätes 10 über eine Schnittstelle 15 ("ReadWrite-LocalCFC_DB") zu ändern sowie diese lokalen Inhalte über eine weitere Schnittstelle 16 ("ReadWrite-RemoctCFC_DB") in den Speicher DB1 des ersten Automatisierungsgerätes 10 zu übertragen.

Um sicherzustellen, dass eines der beiden Automatisierungsgeräte 9, 10 im Falle einer Auslagerung auf das andere Automatisierungsgerät 9, 10 mit den auszuführenden Funktionen FC1, FC2, ... FC5 mit der Peripherie 11, 12 des einen der beiden Automatisierungsgerät 9, 10 interagiert, sind die beiden Rekonfigurationsbausteine R1, R2 ferner mit einer Schnittstelle 17, 19 ("ReadWrite-Remote_IO") für Remote I/O-Zugriffe und einer weiteren Schnittstelle 18, 20 ("ReadWrite-Local_IO") für lokale I/O-Zugriffe versehen.

Wie erläutert wird angenommen (Figur 2), dass zunächst in einem initialen Ladezustand (Grundzustand) das erste Automatisierungsgerät 9 die drei Funktionen FC1, FC2, FC3 zu verarbeiten hat und daher im Speicher DB1 in drei Speicherbereichen drei Abarbeitungsregeln CFC1*, CFC2* und CFC3* hinterlegt sind. Ferner sind in zwei Speicherbereichen des Speichers DB2 des zweiten Automatisierungsgerätes 10 die Abarbeitungsregeln CFC4*, CFC5* hinterlegt, was darauf hinweist, dass das zweite Automatisierungsgerät 10 die Funktionen FC4, FC5 zu verarbeiten hat, wobei zur Verarbeitung der Funktionen die beiden Automatisierungsgeräte 9, 10 geeignete Interpreter IP1, IP2 aufweisen.

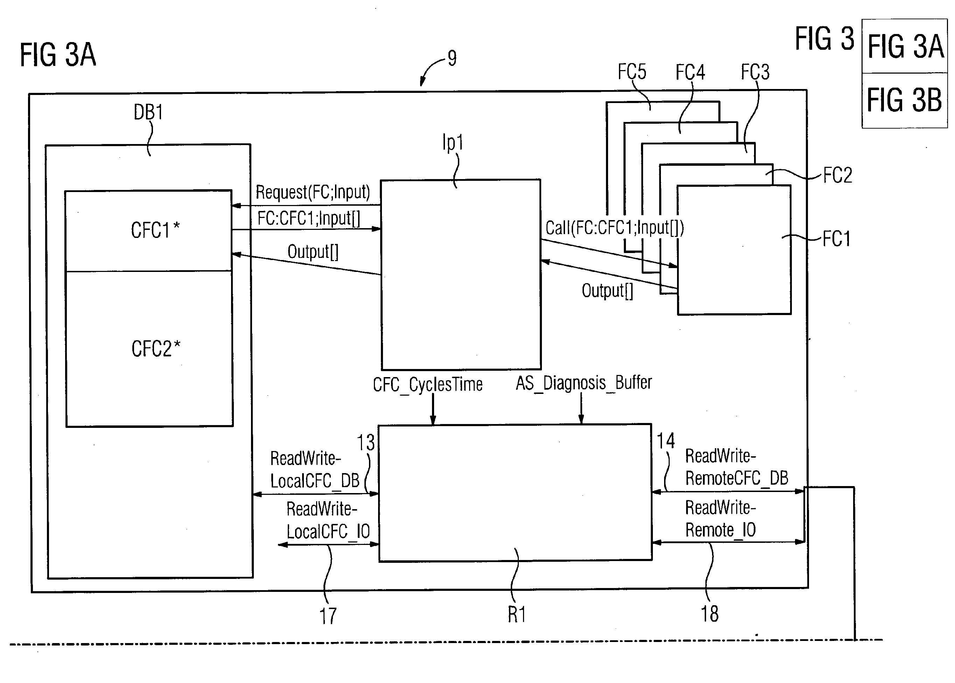

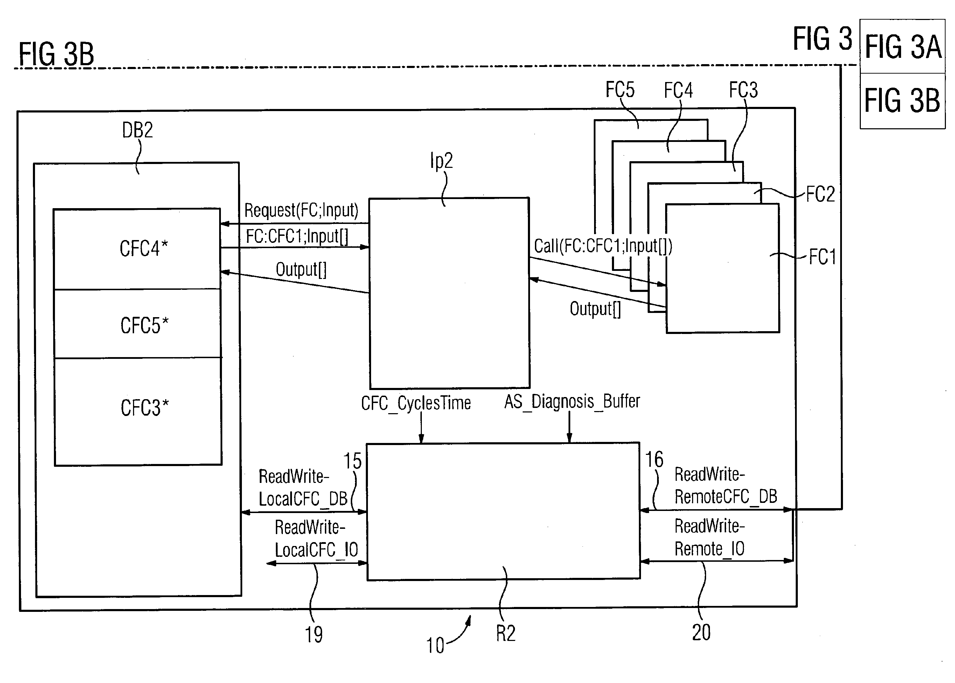

Für den Fall, dass der Rekonfigurationsbaustein R1 des ersten Automatisierungsgerätes 9 eine Überschreitung der Zykluszeit erkennt, bereitet dieser Rekonfigurationsbaustein R1 im vorliegenden Ausführungsbeispiel die Auslagerung der Abarbeitungsregel CFC3* ein. Falls der Rekonfigurationsbaustein R2 des zweiten Automatisierungsgerätes 10 in einer geeigneten Art und Weise einer Auslagerung zustimmt, wird mit der Übertragung von der Abarbeitungsregel CFC3* aus dem Speicher DB1 des ersten Automatisierungsgerätes 9 in den Speicher DB2 des zweiten Automatisierungsgerätes 10 begonnen und die Abarbeitungsregel CFC3* in den Speicher DB2 hinterlegt (Figur 3).

Aufgrund dessen, dass die Abarbeitungsregel CFC3* und somit die Funktion FC3 nach wie vor mit der Peripherie 11 des ersten Automatisierungsgerätes 9 über das Prozessabbild (Abbild der Prozesseingangsdaten sowie Prozessausgangsdaten) des ersten Automatisierungsgerätes 9 interagieren muss, übermittelt der Rekonfigurationsbaustein R1 des ersten Automatisierungsgerätes 9 über die Schnittstelle 18 die Daten dieses Prozessabbildes dem zweiten Automatisierungsgerät 10, dessen Rekonfigurationsbaustein R2 diese Daten über die Schnittstelle 20 empfängt und für die Verarbeitung der Funktion FC3 bereitstellt. Die Rekonfiguration der Automatisierung ist damit abgeschlossen und in einem folgenden Verarbeitungszyklus des zweiten Automatisierungsgerätes 10 wird dadurch die Ausführung bzw. Verarbeitung der Funktion FC3 mittels des Interpreters IP2 des zweiten Automatisierungsgerätes 10 bewerkstelligt, das erste Automatisierungsgerätes 9 ist von der Verarbeitung der Funktion FC3 entlastet. Falls das erste Automatisierungsgerät 9 einen sicheren und echtzeitfähigen Betriebszustand einnimmt, kann die Rekonfiguration selbstverständlich rückgängig gemacht werden, wodurch das erste Automatisierungsgerät 9 die Funktion FC3 wieder verarbeitet.

## Patentansprüche

1. Verfahren zum Betreiben einer Automatisierungseinrichtung (6), wobei
- mittels eines grafischen Editors eines Engineering-Systems (7) eine Vielzahl von Funktionsplänen (1) erstellt wird,
- die Funktionspläne (1) zur Automatisierung einer technischen Anlage oder eines technischen Prozesses vorgesehen sind,
- jeder Funktionsplan (1) in eine Funktion (FC1, FC2, ... FC5) übersetzt wird,
- jede Funktion (FC1, FC2, ... FC5) in mindestens zwei Automatisierungsgeräte (9, 10) geladen wird,
- auf jedem der beiden Automatisierungsgeräte (9, 10) die Funktionen (FC1, FC2, ... FC5) verarbeitet werden, für die in dem jeweiligen Automatisierungsgerät (9, 10) ein Speicherbereich zugeordnet ist, dessen Inhalt (CFC1*, ... CFC5*) zum Aufrufen der jeweiligen Funktion (FC1, FC2, ... FC5) sowie zur Versorgung dieser Funktion (FC1, FC2, ... FC5) mit Parametern vorgesehen ist,
- jeweils eine Zykluszeit für die Verarbeitung der jeweiligen Funktionen (FC1, FC2, ... FC5) in den Automatisierungsgeräten (9, 10) mittels eines Rekonfigurationsbausteins (R1, R2) überwacht wird, wobei für den Fall, dass in einem der beiden Automatisierungsgeräte (9, 10) die jeweilige Zykluszeit eine vorgegebene Schwelle überschreitet, der Inhalt (CFC3*) einer seiner Speicherbereiche in das jeweils andere Automatisierungsgerät (9, 10) mittels des Rekonfigurationsbausteins (R1, R2) des einen Automatisierungsgerätes (9, 10) ausgelagert wird.

2. Verfahren nach Anspruch 1, **dadurch gekennzeichnet, dass** mittels des Rekonfigurationsbausteins (R1, R2) des anderen Automatisierungsgerätes (9, 10) die Auslagerung quittiert wird.

3. Verfahren nach Anspruch 1 oder 2, **dadurch gekennzeichnet, dass** die Auslagerung einem Anwender angezeigt wird.

4. Automatisierungseinrichtung mit einem Engineering-System (7) zur Erstellung einer Vielzahl von Funktionsplänen (1), die zur Automatisierung einer technischen Anlage oder eines technischen Prozesses vorgesehen sind, wobei
- das Engineering-System (7) dazu ausgebildet ist, jeden Funktionsplan (1) in eine Funktion (FC1, FC2, ...FC5) zu übersetzen und jede Funktion (FC1, FC2, ... FC5) in mindestens zwei Automatisierungsgeräte (9, 10) der Automatisierungseinrichtung (6) zu laden,
- jedes der Automatisierungsgeräte (9, 10) dazu ausgebildet ist, die Funktionen (FC1, FC2, ... FC5) zu verarbeiten, für die jeweils im jeweiligen Automatisierungsgerät (9, 10) ein Speicherbereich zugeordnet ist, dessen Inhalt (CFC1*, ... CFC5*) zum Aufrufen der jeweiligen Funktion (FC1, FC2, ... FC5) sowie zur Versorgung dieser Funktion (FC1, FC2, ... FC5) mit Parametern vorgesehen ist,
- jedes Automatisierungsgerät (9, 10) einen Rekonfigurationsbaustein (R1, R2) aufweist, der jeweils dazu ausgebildet ist, eine Zykluszeit für die Verarbeitung der Funktionen (FC1, FC2, ... FC5) in dem jeweiligen Automatisierungsgerät (9, 10) zu überwachen, wobei für den Fall, dass in einem der Automatisierungsgeräte (9, 10) die Zykluszeit eine vorgegebene Schwelle überschreitet, der Rekonfigurationsbaustein (R1, R2) dieses Automatisierungsgerätes (9, 10) den Inhalt (CFC3*) einer seiner Speicherbereiche in das andere Automatisierungsgerät (9, 10) auslagert.

5. Automatisierungseinrichtung nach Anspruch 4, **dadurch gekennzeichnet, dass** der Rekonfigurationsbaustein (R1, R2) des anderen Automatisierungsgerätes (10) dazu ausgebildet ist, die Auslagerung zu quittieren.

6. Automatisierungseinrichtung nach Anspruch 4 oder 5, **dadurch gekennzeichnet, dass** Rekonfigurationsbausteine (R1, R2) dazu ausgebildet sind, die Auslagerung einem Anwender anzuzeigen.

7. Automatisierungsgerät für eine Automatisierungseinrichtung nach einem der Ansprüche 4 bis 6, **dadurch gekennzeichnet, dass** das Automatisierungsgerät (9, 10) mit einem Rekonfigurationsbaustein (R1, R2) versehen ist, der dazu ausgebildet ist, eine Zykluszeit für die Verarbeitung der Funktionen (FC1, FC2, ... FC5) im Automatisierungsgerät (9, 10) zu überwachen, wobei für den Fall, dass in dem Automatisierungsgerät (9, 10) die Zykluszeit eine vorgegebene Schwelle überschreitet, der Rekonfigurationsbaustein (R1, R2) den Inhalt (CFC3*) einer seiner Speicherbereiche in ein anderes Automatisierungsgerät (9, 10) auslagert.

8. Automatisierungsgerät nach Anspruch 7, **dadurch gekennzeichnet, dass** der Rekonfigurationsbaustein (R1, R2) dazu ausgebildet ist, die Auslagerung des Inhalts eines Speicherbereichs zu quittieren.

9. Automatisierungsgerät nach Anspruch 7 oder 8, **dadurch gekennzeichnet, dass** der Rekonfigurationsbaustein (R1, R2) dazu ausgebildet ist, die Auslagerung einem Anwender anzuzeigen.
